# EUROPEAN PATENT APPLICATION

(11) **EP 4 676 064 A1**
(43) Date of publication of application: **07.01.2026**
(21) Application number: 24186828.0
(22) Date of filing: 05.07.2024
(51) Int. Cl.: H04N 21/4223, H04N 21/43, H04N 21/44

(54) **DATA SYNCHRONISATION**

(71) Applicant: Helsing GmbH, 81671 Munich (DE)
(72) Inventor: JUNGWIRTH, Julian, 81671 Munich (DE)
(74) Representative: Rummler, Felix

(57) **Abstract**

According to the present disclosure, there is provided a computer-implemented method for synchronising data with associated analysis data, the method comprising: receiving a data stream, the data stream including first data and subsequently received second data; generating first analysis data associated with the first data; determining, based on the first analysis data, second analysis data associated with the second data, to synchronise the second data and the second analysis data; and outputting the synchronised second data and second analysis data to a user and/or processing device.

## Description

### Field

The present disclosure generally relates to methods, systems and devices for data synchronisation. In particular, the present disclosure relates to synchronising the output of data in a data stream with the output of associated analysis data.

### Background

The tracking of objects is used in advanced driver assistance systems and other applications. In some applications, it is known to display images of a tracked object together with supplementary visual information. An example is a gimbal tracking system in a helicopter. Such system may include a deep learning-based object tracking-by-detection system, which typically has a latency in the order of 100s of milliseconds in terms of processing and analysis of the imagery. The results of such analysis may be bounding boxes around objects of interest, which are presented to an operator in the helicopter as image overlays in a video stream. The operator watching the video stream might interact with the bounding boxes via a user interface in a time-sensitive fashion. However, due to the latency, the bounding boxes may be offset with respect to the objects when the objects or the field of view are moving. This can affect any functionality that builds upon the visualised tracking results. For example, a user might want to click on an object bounding box to learn more about the object's properties or to start a procedure like controlling the camera gimbal to stay on the selected object. In such case, offsets between displayed objects and visualised supplementary information may result in operating errors and malfunctions.

The present invention aims to address these and other issues associated with conventional systems.

### Summary of the Invention

The present invention is defined in the independent claims. The dependent claims recite selected optional features.

It is an object of the present disclosure to provide methods, systems and devices that enable better matching the output of a sensor with associated analysis data. In particular, it is an object to improve the positioning of bounding boxes in a stream of images of objects of interest.

To achieve these and other objects, according to an aspect of the present disclosure, there is provided a computer-implemented method for synchronising data with associated analysis data, the method comprising: receiving a data stream, the data stream including first data and subsequently received second data; generating first analysis data associated with the first data; determining, based on the first analysis data, second analysis data associated with the second data, to synchronise the second data and the second analysis data; and outputting the synchronised second data and second analysis data to a user and/or processing device.

The method may be used to determine a time offset between displaying images of an object and displaying related analysis data. The time offset includes the time required to generate the analysis data, amongst other things. The analysis data may represent a bounding box associated with a moving object. The object may be displayed to user in "real-time", i.e., with only minimal delay, whereas additional time is needed to process the images and generate the analysis data. By the time the bounding box is generated and displayed, the object may have moved. The present method addresses this by synchronising the displaying of images and the displaying of the analysis data. This is achieved by determining the (second) analysis data for a given frame based on the available (first) analysis data for a preceding frame. Determining the second analysis data based on the first analysis data enables determining and taking into account the time offset between displaying a preceding frame and the corresponding first analysis data. A specific example may include determining that a preceding frame was displayed at t0, and that the corresponding first analysis data was displayed at time t1. Accordingly, the time offset may be determined to be Δt = t1-t0. On this basis, generating the analysis data for the next frame may be initiated at some time (i.e., Δt) before displaying the next video frame. Thereby, the displaying of the next video frame and the associated (second) analysis data can be synchronised.

This example is provided for illustrative purposes. The present disclosure is not limited to video data or outputting the data by displaying it. Rather, the method is also applicable to other types of data and data outputting.

The first data does not necessarily represent data that immediately precedes the second data in the data stream. Rather, the first data generally denotes data that is received before the second data, at any time or position in a sequence of data.

In an embodiment, the second analysis data represents an estimate and/or an extrapolation based on the first analysis data. In this embodiment, the second analysis data is generated by making an estimate or extrapolation using the first analysis data. Thus, rather than (only) using sensor data, the second analysis data for the second data (e.g., image frame) is derived from the available first analysis data relating to the preceding first data (frame). Thereby, it is not necessary to wait until (all) the sensor data representing the second data is available. In other words, the processing and generation of the second analysis data may begin earlier, thereby eliminating potential delays and enabling a synchronised output of the second data and second analysis data.

In an embodiment, the second analysis data is determined before the second data is received. In this embodiment, the second data is received after the processing to generate the second analysis data has begun or is completed. In other words, the second analysis data may already be available when the second data is received, or at least by the time the second data is to be output. Thereby, the second data and the second analysis data may be output in a synchronised manner (i.e., at the same time).

The method may further include: determining first time information indicative of the time required for generating the first analysis data; and using the first time information for synchronising the second data and the second analysis data. In this embodiment, the time that is needed to generate the first analysis data based on the first data is determined. This time is indicative of a time delay between the point in time when data becomes available and the subsequent point in time when the corresponding analysis data is ready. This information can be used to synchronise the outputting of the second data and the second analysis data. This may be done in different ways, e.g. by generating the second analysis data earlier, for example even before the second data is received.

The method may further include: determining second time information indicative of the time required for outputting the first analysis data; and using the second time information for synchronising the second data and the second analysis data. In this embodiment, the time that is needed to output the first analysis data is determined. This time is indicative of a time delay between the point in time when data is received and the subsequent point in time when it is output (e.g., displayed). This second time information can also be used to synchronise the outputting of the second data and the second analysis data. It can be used in conjunction with or separately from the first time information.

The method may further include: determining third time information indicative of the time required for outputting data included in the data stream; and using the third time information for synchronising the second data and the second analysis data. In this embodiment, the time that is needed to output data from the data stream is determined. This time is indicative of a time delay between the point in time when data is received and the subsequent point in time when the data is output. This third time information can also be used to synchronise the output of the second data and the second analysis data. For example, the third time information may indicate that there is sufficient time to generate and output the second analysis data at the same time as outputting the second data. This may require accelerating the generation and outputting of the second analysis data so that these two steps are completed in the same period as the step of outputting the second data.

The method may further include: synchronising the first data and the first analysis data using data indicating a relationship, in particular a temporal relationship between the first data and the first analysis data, and in particular wherein said data indicates a time offset between the first data and the first analysis data, wherein the time offset is based on a measurement or an estimate.

In this embodiment, also the first data is also synchronised with the corresponding first analysis data. The first data may represent any data item of the data stream for which no analysis data of a corresponding preceding data item is available to perform the synchronisation along the lines of the synchronisation of the second analysis data with the associated second data. More specifically, the first data may represent the first data item of the data stream following a start or restart of the method. For example, the method may be started or re-started when data representing a (new) object to be tracked is detected. The temporal information that indicates a time offset between (outputting) the first analysis data and the first data may be obtained by measurements. Alternatively, the time offset may be estimated. More generally, this embodiment enables taking into account "pre-first" analysis data, or "zero" analysis data to synchronise the first analysis data and the corresponding first data. Such "zero" analysis data may additionally be taken into account when synchronising the second analysis data with the second data, thereby increasing the accuracy of the synchronisation.

A start or re-start of the method may refer to the start of a new event such as starting a new object track. Such new event may include components or parameters that are independent of other (previous) events. For example, if the new event relates to the tracking of a new object, the movement of the object may be unrelated to the movement of other (previously tracked) objects. Other components or parameters may be correlated to those of a previous event. For example, a camera used to track an object may be associated with the same or similar parameter values for a current and previous objects, such as a camera movement or, more particularly, a displacement of a bounding box due to a moving field of view. Such dependent components or parameters can this be estimated or extrapolated for a new event using the corresponding components or parameters of a previous event.

Accordingly, in an embodiment, the method comprises synchronising the first analysis data with the associated first data and/or synchronising the second analysis data with the associated second data based on data from another data stream. The other data stream may relate to another object that has been or is being tracked.

In an embodiment, the data stream includes a plurality of data items received before the second data, including the first data, wherein each of said data items is associated with a respective item of analysis data, and wherein the second analysis data is determined based on selected one or more of said items of analysis data.

In this embodiment, the second analysis data is determined based on the analysis data associated with selected data items that are received before the second data. It is noted that the plurality of data items includes said first data; in other words, one of the plurality of data items corresponds to the first data, although it is not necessarily the data item that immediately precedes the second data in the data stream. For simplicity, assume that there is a sequence of first, second, third and fourth data items preceding the second data. According to the present embodiment, the second analysis data may be determined based on the analysis data associated with the first, second, third and/or fourth data item. This is applicable to any number of data items. Thereby, it is possible to deal with larger time delays. For example, the time delay might be so large that the second analysis data is generated based on the analysis data for a data item that precedes the second data by two or more data items. The present embodiment enables continuously determining the time offset and dynamically adjusting how the second analysis data is determined, i.e., how forward-looking a system implementing the method must be.

In embodiments where the data stream includes video data, the data items may correspond to image frames.

In an embodiment, the second analysis data is determined based on a combination, in particular an average of the selected one or more of said items of analysis data. In this embodiment, the second analysis data is determined based on the analysis data of at least two preceding data items. For example, the second analysis data represents an average or any other combination of previous analysis data.

In an embodiment, the first and second data comprises video data, and wherein the first and second analysis data comprises displayable data, wherein outputting the synchronised second data and second analysis data comprises displaying the synchronised second data and second analysis data to the user. In this embodiment, the data stream comprises video data, e.g., a sequence of video frames representing images of a moving object. The method eliminates time lags between displaying images representing the second data and visual information representing the second analysis data.

In an embodiment, displaying the synchronised second data and second analysis data comprises displaying images included in the second data and overlaying visual information representing the second analysis data. In this embodiment, the second data is overlayed with visual information representing the second analysis data. For example, the second analysis data may be a bounding box of a moving object, or parameters relating to the object such as its speed, distance or coordinates. This information can thus be visualized next to the object in a synchronised way.

In an embodiment, the first and second data include image data obtained by an image sensor, in particular a camera, wherein the image data includes images of an object that is moving relative to the image sensor, wherein the method further comprises: obtaining information indicative of a movement of the object relative to the image sensor; and processing the movement information to determine the second analysis data and/or to synchronise the second data and the second analysis data.

In this embodiment, the data stream comprises video data, e.g., a sequence of video frames representing images of a moving object. A movement of the object is taken into account when determining the second analysis data. For example, during the period required for generating a bounding box, the object may move relative to the sensor by a distance. The bounding box is adapted (e.g., shifted on a display) accordingly. The distance may be determined (estimated) based on the movement information, e.g., speed and direction of the object. Thereby, the method enables displaying the object and associated analysis data in a synchronised and consistent manner.

The method may further include: obtaining the first and second data using a sensor; obtaining metadata relating to the sensor; and processing the metadata to determine the second analysis data and/or to synchronise the second data and the second analysis data. In this embodiment, synchronising the second analysis data and the second data also takes into account metadata relating to a sensor that is used to obtain the second data. Such metadata can relate to any sensor parameter that is relevant to the timing of outputting data from the sensor, e.g. a sampling or frame rate.

In an embodiment, the sensor is an image sensor, in particular a camera, and wherein the metadata includes information relating to a field of view and/or a pose of the image sensor, and/or information indicative of a position of the sensor when capturing data.

In this embodiment, the sensor is a camera, and the metadata includes information on the camera's field of view, pose and/or position. These parameters may be expressed in terms of absolute values or coordinates, or relative to a (moving) object captured by the camera. However, the present method can be implemented with different types of sensors, e.g., visual, acoustic or radar sensors, and/or ground or aerial sensors, and any combination of such sensors. The sensor signals and data may include any one or more of electro-optical, infrared, radar, synthetic aperture radar, LIDAR, acoustic and seismic signals, signal-intelligence data, or the like.

According to another aspect of the present disclosure, there is provided an object tracking system comprising: a sensor, in particular an image sensor; and one or more processors configured to perform the computer-implemented method as described above.

The above method may be applied to an object tracking system. Such object tracking system includes a sensor for detecting and tracking an object. The method can be applied to the data stream output by the sensor. Thus, the method can be used to enhance an existing tracking system by outputting analysis data relating to a tracked object in a synchronised fashion.

### Brief description of the drawings

The features, objects, and advantages of the present disclosure will become more apparent from the detailed description set forth below when taken in conjunction with the drawings in which:
Figure 1 schematically illustrates a system in which sensor data and associated analysis data may become asynchronous;
Figure 2 schematically illustrates a system for synchronising sensor data and associated analysis data according to an embodiment of the present disclosure;
Figure 3 illustrates a flow diagram including steps of a method for synchronising sensor data and associated analysis data according to an embodiment of the present disclosure; and
Figure 4 schematically illustrates a device for synchronising sensor data and associated analysis data according to an embodiment of the present disclosure.

### Detailed description of exemplary embodiments

The present disclosure provides a technical solution to compensate latency-caused issues in object tracking inference pipelines where synchronisation is not possible due to the real-time requirement of the raw data stream. This results in a better user experience when consuming a tracking system's results and in an improved efficiency of functionality building upon the tracking system's output. Additionally, the requirement of having a low latency for the tracking system is alleviated. This requirement often is a ceiling for the tracking system's accuracy.

Thus, the proposed solution may lead to a more accurate tracking system. Typically, a tracking system with higher capacity is more accurate but also comes with higher latency. Thus, the capacity and so the accuracy of the tracking is typically limited by the use case requirements. With the present systems and methods, this limit can be higher. In other words, a higher latency is acceptable due to the latency reduction that can be achieved by the present systems and methods. In turn, an analyser with more capacity (e.g., a larger neural network for object detection in imagery) can be used which leads to a higher accuracy.

The presented solution enables reducing latency-caused issues by extrapolating the tracking system results. This may be done by predicting properties of the results as function of the latencies of the system itself and optionally latency contributions accumulated outside of the system, the image content itself such as object movement, and the sensor metadata such as pose and field of view. The solution can be seen as a virtual synchroniser of the tracking system's output. The solution may include reusing information and calculation methods from the tracking system for computational efficiency.

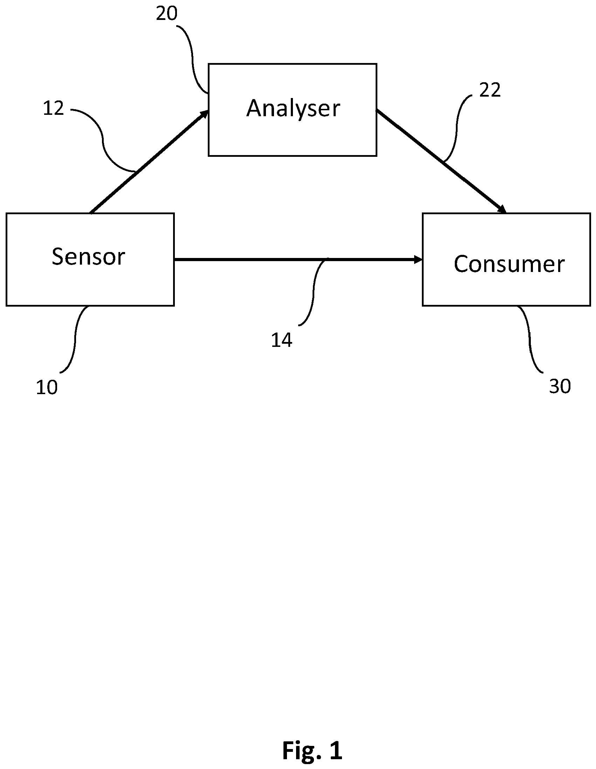

The present disclosure provides new methods, systems and devices for synchronising data in a data stream and associated analysis data. The analysis data is generated based on the data in the data stream. Since the process of generating the analysis data takes some time, the analysis data may be received by a user sometime after receipt of the data on which the analysis data is based. This is illustrated in Figure 1. A sensor 10 outputs data to an analyser 20 in a first data stream 12 and to a client (user/consumer) device 30 in a second data stream 14. (The content of the first and second data streams 12, 14 are the same). The analyser 20 is configured to process the data from the data stream 12 and to generate analysis data. Examples for such analysis data are described below. The analysis data is output by the analyser 20 in a result stream 22 and transmitted to the client device 30. Essentially, in the schematic representation of Figure 1, the following processes are associated with a latency:
(1) Transmission of the data stream 12 from the sensor 10 to the analyser 20.
(2) Data processing by the analyser 20 between data receipt and output.
(3) Transmission of the result stream 22 from the analyser 20 to the client device 30.
(4) Transmission of the data stream 14 from the sensor to the client device 30.

The accumulated latency of (1), (2) and (3) is different, usually larger, than the latency of (4). Accordingly, the client device 30 receives the data stream 14 and the result stream 22 at different points in time.

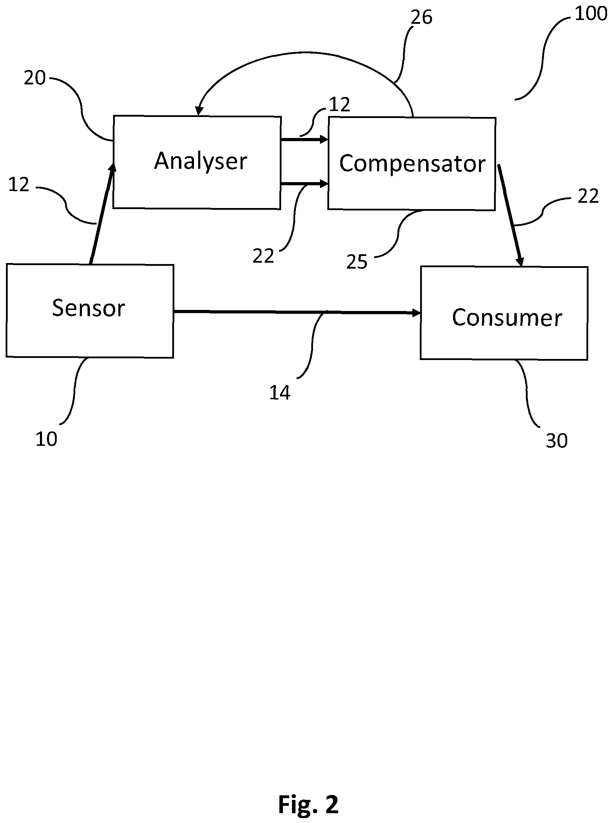

Figure 2 schematically illustrates a system 100 for eliminating such time lag in accordance with an embodiment of the invention. In addition to the elements shown in Figure 1, the system 100 includes a compensator 25. The compensator 25 is configured to determine a latency of the result stream 22 relative to the data stream 14. The latency determined by the compensator 25 may include any of the latencies (1), (2) and (3) described above. The compensator 25 is further configured to synchronise the result stream 22 and the data stream 14. As a result, the result stream 22 and the data stream 14 are received by the client device 30 in a synchronised way, i.e. at the same or substantially the same time.

The compensator 25 may be configured to determine the latency by estimation and/or measurement. In the illustrated example, there are two streams between the analyser 20 and the compensator 25. That is, in addition to transmitting the result stream 22, the analyser also transmits the unprocessed data stream 12 to the compensator 25. Thereby, the compensator 25 is enabled to determine (measure) the time lag between data contained in the data stream 12 and corresponding analysis data contained in the result stream 22. For example, the data stream 12 may contain a sequence of data items. The analyser 20 may be configured to generate a corresponding analysis data item for each of the data items of the sequence. In other words, each data item has a corresponding analysis data item. In this example, the compensator 25 is configured to measure the time difference between receiving the data items and receiving the corresponding analysis data items. This time difference represents the processing time required by the analyser 20 to generate analysis data, corresponding to latency (2) above.

In an embodiment, the time difference may be determined individually for each data item. In an alternative embodiment, the compensator 25 is configured to determine an average time difference. The average time difference may be adjusted over time. In another embodiment, the time difference may be determined for selected data items, e.g., every other data item, to reduce the processing overhead of the compensator 25. In any case, the time difference can then be used to provide a synchronised output of the data stream 14 and the result stream 22 to the client device 30.

Synchronising the data stream 12 and the result stream 22 can be implemented in different ways. In one embodiment, the analyser 20 is configured to accelerate the generation of the analysis data. This can be done by initiating the processing to generate the analysis data earlier. For example, the processing to generate an item of analysis data may be begun even before the corresponding data item is received by the analyser 20. In this case, the analysis data may be generated by estimation or extrapolation. In particular, the analysis data item corresponding to a current data item may be estimated or extrapolated on the basis of an analysis data item corresponding to the preceding data item.

In a specific example, assume that the data stream includes a sequence of data items A and B. The corresponding items of analysis data are referred to as A' and B'. When data item A is received, the latency of generating the corresponding analysis data item A' is determined as described above. The latency is referred to as Δt. Accordingly, the processing to generate the analysis data item B' may be begun by a period Δt in advance, e.g., by a period Δt before the data item B is received.

In an embodiment, the system 100 includes a feedback loop 26 between the compensator 25 and the analyser 20. The compensator 25 is configured to transmit latency information to the analyser 20. The analyser 20 uses the latency information (Δt) to control the processing of the analysis data (item B') for incoming data (item B) as described above. The feedback loop 26 can also be used to determine changes of the latency over time and to adjust the processing of the analysis data accordingly.

The analyser 20 is configured to generate the analysis data so that it may be received by the user device 30 at substantially the same time as the corresponding data of the data stream 12. This may require accelerating the processing of the data of the data stream 12, and/or shifting the processing in time, as described above. Shifting means bringing the processing forward in time, e.g., by Δt. This may require generating the analysis data when the corresponding data on which it is based is not yet (fully) received. In such case, the processing may include estimating the analysis data. The estimation may be based on one or more items of analysis data relating to one or more preceding items of corresponding data of the data stream 12. In the above example, the analysis data item B' may be determined by estimation based on the analysis data item A'. Similarly, a subsequent analysis data item C' may be determined by estimation based on the analysis data item B' (and, optionally, item A'), and so on.

The estimation may include extrapolation of information included in one or more preceding items of analysis data. In an illustrative example, the analysis data may include the GPS coordinates of an object represented by the corresponding data of the data stream 12. Consecutive items of the analysis data, namely a change of coordinates over time may indicate a movement of the object. This information may then be taken into account to project the coordinates of the object as represented by a next data item of the data stream 12.

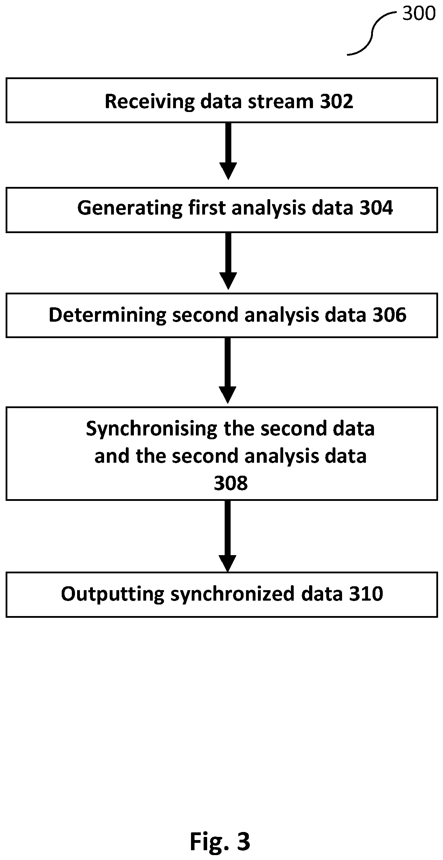

Figure 3 illustrates a flow chart of a method 300 for synchronising data with associated analysis data. In step 302, a data stream is received. The data stream includes a plurality of data items. The data items may be received sequentially. The data stream may be output by a sensor, for example an image sensor. However, the present method is applicable to other outputs and sensors, e.g., radar, lidar and acoustic sensors. In the example where the sensor is an image sensor, the data items may represent images of an object to be tracked.

In step 304, first analysis data is generated. The first analysis data is associated with a first one of the data items of the data stream. The first analysis data may contain any information relating to the first data item. For example, the first analysis data may be GPS coordinates of an object represented by the first data item, or GPS coordinates of a sensor used to generate the first data item. In another example, the first analysis data may represent a bounding box in an image of an object to be tracked.

In step 306, second analysis data is determined. The second analysis data is associated with a second data item that is received subsequently to the first data item, for example the data item that is received next after receiving the first data item. The second analysis data may have the same type of content as the first analysis data. In the above examples, if the first analysis data represents coordinates of an object, the second analysis data also represents coordinates of the same object. The second analysis data is determined based on the first analysis data. This may be done by estimation, projection, extrapolation or other approaches.

By determining the second analysis data on the basis of the first analysis data, it is possible to determine the second analysis data even before the second data item is received. Thereby, it is possible to synchronise the second analysis data and the second data item, as per step 308. In this embodiment, the synchronisation results from the way the second analysis data is determined in step 306. Synchronisation means that the second analysis data and the corresponding second data item may be output to a user at the same time, or at least that the time offset is below a threshold. The threshold may be predetermined or set by a user.

In step 310, the synchronised data is output. In an embodiment, the synchronised data is output to a user. For example, the data stream may include image frames representing images of a tracked object. In this example, the second data item represents an image of the tracked object, and the second analysis data may be a bounding box in the image. The image of the object and the bounding box may be output (displayed) together, i.e. the bounding box may be overlayed over the image of the object. In this way, object and bounding box can be displayed in a consistent and synchronous manner.

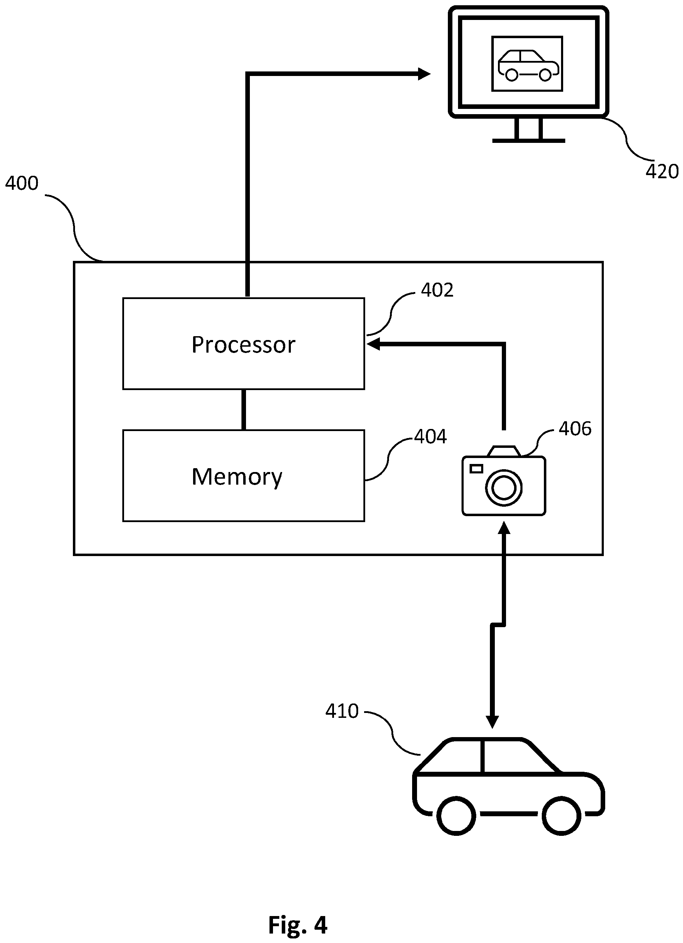

Figure 4 illustrates a schematic block diagram of a device 400 according to an embodiment of the present disclosure. The device 400 comprises at least one processor 402 communicatively coupled to a memory 404. The memory 404 can be any type of memory. The device 400 further includes a sensor 406 communicatively coupled to the processor 402. The sensor 406 is configured to obtain sensor data relating to an object 410. For example, the sensor 406 may be a camera that generates images of a car. The device 400 can implement an object tracking system that may be integrated in a vehicle, such as a car or drone. The memory 404 stores instructions that, when executed by the processor 402, result in the execution, at least in part, of a method as described above. The processing results, i.e., the synchronised data and analysis data, are output to a user, for example through a display 420. In the illustrated example, the display shows a car (represented by the data) surrounded by a bounding box (represented by the analysis data).

### Additional Features and Embodiments

A system according to an embodiment of the present disclosure can include the following components:
1. A sensor (e.g., a video camera), such as the sensor 10 in Figure 2. The sensor is configured to output sensor data, typically as a data stream (e.g., a video stream, optionally with metadata like field of view, camera pose, sensor coordinate at the point of the capture).
2. A sensor data analyser with a tracking functionality, such as the analyser 20 in Figure 2. The analyser is configured to process data content of interest having properties that can be temporally correlated to some degree, and thus, predicted (e.g., a car tracking system).
3. A consumer system such as the client device 30 in Figure 2. The consumer system is configured to receive the sensor output and the sensor data analyser's output. For example, it includes a user interface that visualises the video feed and overlays a car tracking system's bounding box output.

The data is of a type that can be treated and processed in samples, meaning a well-defined portion of the data stream with a corresponding timestamp (e.g., a single video frame). In embodiments, there is a system clock coupled to all components of the system to have a access to enable measuring latencies.

In addition to the above, the system includes a compensator, such as the compensator 25 shown in Figure 2. The compensator is inserted into the result stream to synchronise the data stream and the result stream. The compensator outputs a modified result stream whose content is extrapolated to become virtually synchronised with the data stream.

In an embodiment, the compensator is integrated with the analyser. For example, the compensator may be configured to re-use virtual instances of objects of interest being tracked, as this can save computational work. Additionally, timing monitoring information optionally can be transmitted from the analyser and the consumer to the compensator.

In accordance with an embodiment of the invention, there is provided a computer implemented method for synchronising a data stream and analysis data associated with the data stream to be output to a user, the method comprising: receiving data stream, the data stream including first data and subsequently received second data; estimating, in particular extrapolating, second analysis data associated with the second data based on previously determined first analysis data associated with the first data; synchronising the received second data and the estimated second analysis data; simultaneously outputting, in particular displaying, the synchronised second data and estimated second analysis data to a user and/or further processing device.

In embodiments, the second data may not yet be received when performing the estimation step.

The method is applicable to any time sensitive application.

Synchronising may include estimating or determining system latency. Example:
1. Receive video frames 1-3
2. Determining bounding boxes for objects in video frames 1-3
3. Determining time period needed for step 2 (+ other latency of the system, ie difference between time needed for (i) only outputting the received data and (ii) performing step 2 + outputting the received data).
4. Based on 3, determining number of subsequent frames for which bounding boxes need to be estimated, such that at least an estimated bounding box can be simultaneously output with each directly output image frame.

In the following, additional exemplary implementations are described.

With i corresponding to a point in time, the compensator's inputs are:
1. sample[i],
2. result[i] for sample[i] where a result contains all the observations with properties made with respect to the corresponding sample (eg, detected cars),
3. (optional) time monitoring information for information flows (eg, sample transfer from the sensor to the analyser) and latencies occurring in the individual processing steps (e.g., the analyser's work),
4. (optional) external current system information like compute device utilisation.

The output is:

```
1. result_extrapolated[i] which is the extrapolated result belonging to sample[i]
        consisting of the results for each tracked instance computed as follows:
        1   result_extrapolated[i, j] = Compose(
        2     SampleTransformation(sample[i], compensation_latency_estimate),
        3     InstanceTransformation(result[i, j], compensation_latency_estimate),
        4     compensation_latency_estimate[i]
        5   )
```

With i corresponding to a point in time noting the correspondence to the sample[i] and j noting an independent tracked instance in result[i] (e.g., an object in a video frame that is tracked). Note, result_extrapolated[i, j] can have multiple components (e.g., each component of a bounding box represented in x1, x2, y1, and y2).

In the above example, the used terminology can have the following meanings:

### Sample transformation

It models the change of an entire sample (e.g., frame zoom and frame displacement). Note, a sample eventually contains metadata on how a sample was captured. This metadata may be used in the sample transformation.

### Instance transformation

It models the properties change over time for a tracked instance (e.g., the pixel displacement of a moving car that is tracked with respect to the street the car is driving on). The instance transformation is seen as independent from the sample transformation.

### Compensation latency estimate

The compensator estimates the latency that is to compensate to achieve an optimal synchronisation of the modified result stream* and the data stream at the consumer side. The value of compensation_latency_estimate[i] corresponding to the sample[i] can be estimated (eg, exponential moving average) based on previous values as
compensation_latency_estimate[k..l] with k<l<i.

For more accuracy, contributions can be measured independently according to:

```
    1   compensation _latency_estimate[i] = LatencyEstimate(
    2     sensor_to_analyser_latency[i],
    3     analyser_latency[i],
    4     analyser_to_consumer_latency[i],
    5     compensator_latency_estimate[i],
    6     -sensor_to_consumer_latency_estimate[i]
    7   )
```

where LatencyEstimate is a function. Here, the contributions with prefix_estimate might be
- assumed constant: a latency value is pre-configured and stays constant over the application's runtime or
- measured-estimate: the value is estimated based on previous samples' latency measurements. Note, for more accurate estimation, it is possible to include further external information like the compute device's current utilisation.

The values without this prefix either are:
- assumed constant: a latency value is pre-configured and stays constant over the application's runtime or
- measured: the value is measured for the currently processed sample.

There can be additional input to LatencyEstimate or even the calculation of its contributions like the current computation device's utilisation.

### Compose

It composes the contributions of sample transformation and content transformation for a tracked instance. It can apply regulation to prevent from over-estimation under fluctuating conditions. For example, an attenuation can be applied.

## Claims

1. A computer-implemented method for synchronising data with associated analysis data, the method comprising:
receiving a data stream, the data stream including first data and subsequently received second data;
generating first analysis data associated with the first data;
determining, based on the first analysis data, second analysis data associated with the second data, to synchronise the second data and the second analysis data; and
outputting the synchronised second data and second analysis data to a user and/or processing device.

2. The computer-implemented method of claim 1, wherein the second analysis data represents an estimate and/or an extrapolation based on the first analysis data.

3. The computer-implemented method of claim 1 or 2, wherein the second analysis data is determined before the second data is received.

4. The computer-implemented method of any preceding claim, further comprising:
determining first time information indicative of the time required for generating the first analysis data; and
using the first time information for synchronising the second data and the second analysis data.

5. The computer-implemented method of any preceding claim, further comprising:
determining second time information indicative of the time required for outputting the first analysis data; and
using the second time information for synchronising the second data and the second analysis data.

6. The computer-implemented method of any preceding claim, further comprising:
determining third time information indicative of the time required for outputting data included in the data stream; and
using the third time information for synchronising the second data and the second analysis data.

7. The computer-implemented method of any preceding claim, further comprising:
synchronising the first data and the first analysis data using data indicating a relationship, in particular a temporal relationship between the first data and the first analysis data, and in particular wherein said data indicates a time offset between the first data and the first analysis data, wherein the time offset is based on a measurement or an estimate.

8. The computer-implemented method of any preceding claim, further comprising:
synchronising the first analysis data with the associated first data and/or synchronising the second analysis data with the associated second data based on data from another data stream.

9. The computer-implemented method of any preceding claim, wherein the data stream comprises a plurality of data items received before the second data, including the first data, wherein each of said data items is associated with a respective item of analysis data, and wherein the second analysis data is determined based on selected one or more of said items of analysis data, in particular wherein the second analysis data is determined based on a combination, for example an average of the selected one or more of said items of analysis data.

10. The computer-implemented method of any preceding claim, wherein the first and second data comprises video data, and wherein the first and second analysis data comprises displayable data, wherein outputting the synchronised second data and second analysis data comprises displaying the synchronised second data and second analysis data to the user.

11. The computer-implemented method of claim 10, wherein displaying the synchronised second data and second analysis data comprises displaying images included in the second data and overlaying visual information representing the second analysis data.

12. The computer-implemented method of any preceding claim, wherein the first and second data include image data obtained by an image sensor, in particular a camera, wherein the image data includes images of an object that is moving relative to the image sensor, the method further comprising:
obtaining information indicative of a movement of the object relative to the image sensor; and
processing the movement information to determine the second analysis data and/or to synchronise the second data and the second analysis data.

13. The computer-implemented method of any preceding claim, further comprising:
obtaining the first and second data using a sensor;
obtaining metadata relating to the sensor; and
processing the metadata to determine the second analysis data and/or to synchronise the second data and the second analysis data.

14. The computer-implemented method of claim 13, wherein the sensor is an image sensor, in particular a camera, and wherein the metadata includes information relating to a field of view and/or a pose of the image sensor, and/or information indicative of a position of the sensor when capturing data.

15. An object tracking system comprising:
a sensor, in particular an image sensor; and
one or more processors configured to perform the computer-implemented method of any preceding claim.
